# EUROPÄISCHE PATENTSCHRIFT

(11) **EP 2 989 501 B1**
(45) Veröffentlichungstag und Bekanntmachung des Hinweises auf die Patenterteilung: **26.04.2017**
(21) Anmeldenummer: 14726512.8
(22) Anmeldetag: 24.04.2014
(51) Int. Cl.: G02C 5/22, G02C 13/00, G02C 5/14, G02C 5/10, G02C 5/00

(54) **VERFAHREN ZUR MONTAGE EINES BRILLENGESTELLS UND VERFAHREN ZUR MONTAGE EINER BRILLE**
METHOD FOR ASSEMBLING A SPECTACLE FRAME AND METHOD FOR ASSEMBLING SPECTACLES
PROCÉDÉ DE MONTAGE D'UNE MONTURE DE LUNETTES ET PROCÉDÉ DE MONTAGE DE LUNETTES

(30) Priorität: 24.04.2013 DE 102013007173
(43) Veröffentlichungstag der Anmeldung: 02.03.2016
(73) Patentinhaber: Bischoff, Joachim, 75210 Keltern (DE); ZHENG, Mu Yin, Longgang District, Shenzhen (CN)
(72) Erfinder: BISCHOFF, Joachim, 75210 Keltern (DE)
(74) Vertreter: Schön, Thilo
(86) Internationale Anmeldenummer: PCT/EP2014/001088
(87) Internationale Veröffentlichungsnummer: WO 2014/173540

(56) Entgegenhaltungen:
- WO-A1-2012/117174
- FR-A1- 2 923 621
- FR-A3- 2 900 477

## Beschreibung

### Technisches Gebiet der Erfindung

Die Erfindung betrifft ein Verfahren zur Montage eines Brillengestells nach Anspruch 1 sowie ein Verfahren zur Montage einer Brille nach Anspruch 2.

### Stand der Technik

Brillengestelle sind in einer großen Vielfalt bekannt, die Grundkonstruktion ist jedoch stets dieselbe: An einem Rahmen, welcher zwei Aufnahmeabschnitte für die Brillengläser aufweist, sind zwei Bügel schwenkbar gehalten. Die Schwenkbarkeit der Bügel ist derart, dass sich jeder Bügel in einer ersten Endstellung im Wesentlichen parallel zum Rahmen und in einer zweiten Endstellung im Wesentlichen senkrecht zum Rahmen, nämlich senkrecht nach hinten, erstreckt. Zur Anordnung der Bügel weist der Rahmen neben jedem Aufnahmeabschnitt einen Anschlussabschnitt auf. In der Regel ist an jedem Anschlussabschnitt ein Scharnier angeordnet, welches einen Bügel schwenkbar trägt.

Häufig sind der Rahmen und die beiden Bügel jeweils einstückig hergestellte Elemente, welche insbesondere vollautomatisch hergestellt werden können. Somit ist der einzig aufwendige Schritt, welcher in der Regel auch mit manueller, nicht automatisierbarer Arbeit verbunden ist, die Herstellung und Montage der Scharniere. Da hier zumeist sehr kleine Schrauben verwendet werden, ist die Endmontage feinmotorisch schwierig.

Aus der FR 2 923 621 A1 ist ein Brillengestell bekannt, dessen Rahmen zwei Anschlussabschnitte aufweist, an welchen jeweils ein Bügel schwenkbar gelagert ist.

Hierzu ist an jedem Anschlussabschnitt ein zweiteiliges zylindrisches Element gehalten, welches wiederum der schwenkbaren Lagerung eines Bügels dient. Insbesondere die Bügel müssen hierfür relativ kompliziert geformt sein und auch die Montage ist recht aufwendig.

Ähnliches zeigt auch die FR 2 900 477 A3, wobei hier statt eines zweiteiligen zylindrischen Elements ein einteiliges, im Wesentlichen halbzylindrisches Element verwendet wird.

### Gegenstand der Erfindung

Hiervon ausgehend stellt sich die vorliegende Erfindung die Aufgabe, ein Montageverfahren für ein Brillengestell zur Verfügung zu stellen, welches sehr einfach ist und welches insbesondere vollständig schraubenlos ausgeführt werden kann. Weiterhin sollen die verwendeten Einzelteile möglichst einfach geformt und somit rationell herstellbar sein.

Diese Aufgabe wird durch ein Montageverfahren mit den Merkmalen des Anspruchs 1 gelöst.

Ein Verfahren zur Montage einer Brille unter Verwendung eines so montierten Brillengestells ist in Anspruch 2 angegeben.

Wenigstens einer der beiden Anschlussabschnitte (in der Regel beide) des Brillenrahmens weist einen sich von einem unteren Ende zu einem oberen Ende erstreckenden ersten Steg mit einem nicht-runden, insbesondere mit einem rechteckigen Querschnitt auf, an welchem eine geschlitzte Hülse mit einem kreisförmigen Außenquerschnitt drehfest angeordnet ist. An dieser Hülse wiederum ist ein Anschlussabschnitt des zugeordneten Bügels an der Hülse gehalten. Der Anschlussabschnitt hat hierbei einen kreisbogenförmigen Querschnitt, wobei der Kreisbogen nicht vollständig geschlossen ist.

Hierbei weist die offene Seite des Schlitzes der Hülse nach vorne, was insbesondere eine unbeabsichtigte Demontage durch den Benutzer zuverlässig verhindert.

Die Montage eines Bügels an seinem Anschlussabschnitt gemäß dem erfindungsgemäßen Montageverfahren ist sehr einfach: Zunächst wird die Hülse in den Halteabschnitt des Bügels eingesetzt und in diesem Zustand wird die Hülse auf den Steg aufgeschoben. Hierbei weist das offene Ende des Schlitzes der Hülse nach vorne und auch das offene Ende des Halteabschnittes des Bügels liegt zunächst vorne. In diesem Zustand wird die Hülse mit dem sich daran befindenden Halteabschnitt des Bügels in einer von hinten nach vorne gehenden Bewegung auf den ersten Steg des Anschlussabschnittes des Rahmens aufgeschoben, so dass der Brillenbügel (oder zumindest der mit dem Anschlussabschnitt unmittelbar verbundene Teil desselben) nach vorne zeigt. In einer anschließenden Bewegung wird der Brillenbügel nach hinten verschwenkt, nämlich durch den vom Aufnahmeabschnitt umgebenen Aufnahmebereich für ein Brillenglas hindurch; dies kann insbesondere unter elastischer Verformung des Bügels erfolgen.

Um den Schwenkradius des Bügels zu begrenzen (wie bei bisherigen Brillengestellen auch, nämlich derart, dass der Schwenkwinkel im Wesentlichen 90° beträgt), ist dem ersten Steg ein zweiter Steg auf der Außenseite benachbart. Um hierbei die eben beschriebene Montagemethode anwenden zu können, befindet sich zwischen dem Steg, welcher die Hülse und damit den Brillenbügel trägt, und dem benachbarten Aufnahmebereich für das Brillenglas vorzugsweise ein offener Einschnitt, welcher unmittelbar in den Aufnahmebereich übergeht.

### Kurzbeschreibung der Erfindung

Die Figuren zeigen:
- Figur 1: ein vollständiges Brillengestell gemäß einem bevorzugten Ausführungsbeispiel der Erfindung,
- Figur 2: einen Teil des Brillenrahmens, eine Hülse und einen vorderen Abschnitt eines Bügels des Brillengestells aus Figur 1 in einem ersten Montagezustand,
- Figur 3: das in Figur 2 Gezeigte in einem zweiten Montagezustand,
- Figur 4: das in Figur 3 Gezeigte in einem dritten Montagezustand, wobei der Brillenrahmen teilweise aufgeschnitten dargestellt ist,
- Figur 5: im Wesentlichen das in Figur 4 Gezeigte (wobei jedoch der gesamte Brillenrahmen dargestellt ist) in einem vierten Montagezustand,
- Figur 6: das in Figur 4 Gezeigte in einem fünften Montagezustand,
- Figur 7: das vollständig montierte Brillengestell (entsprechend Figur 1), wobei der Brillenrahmen wie in Figur 5 teilweise aufgeschnitten dargestellt ist, und
- Figur 8: das Detail D aus Figur 7.

### Beschreibung bevorzugter Ausführungsformen

Im Folgenden werden folgende Definitionen verwendet: Die Begriffe "vorne", "hinten", "rechts", "links", "oben" und "unten" sind aus Sicht des das Brillengestell Tragenden definiert. Das heißt insbesondere, dass "vorne" vom Kopf wegweisend bedeutet und dass "hinten" in Richtung des Kopfes weisend bedeutet. Es ist an dieser Stelle zum besseren Verständnis der Figuren weiterhin zu betonen, dass sämtliche Figuren den Brillenrahmen im Wesentlichen aus dem gleichen Blickwinkel, nämlich schräg von vorne und oben, zeigen.

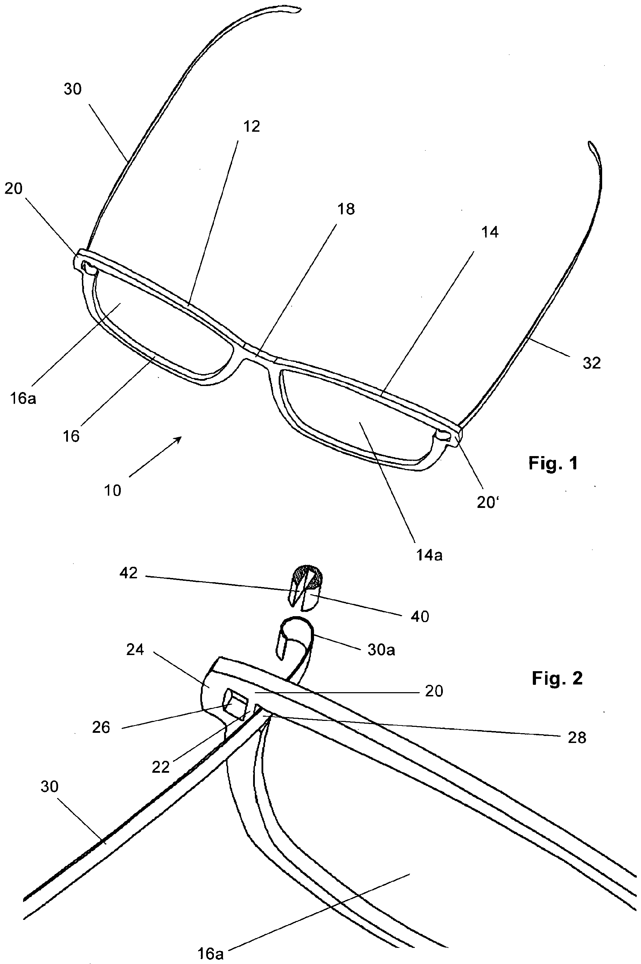

Zunächst wird die Struktur des Brillengestells allgemein mit Bezug auf die Figur 1 erläutert: Wie jedes andere Brillengestell auch, weist das Brillengestell 10 einen Rahmen 12 und zwei an den Außenrändern des Rahmens schwenkbar mit diesem verbundene Bügel 30, 32 auf. Hierbei erstrecken sich die Bügel jeweils von einem rahmenseitigen ersten Ende zu einem rahmenfernen zweiten Ende.

Der Rahmen 12, welcher in einer bevorzugten Ausführungsform aus sogenanntem NXT besteht, hat einen linken Aufnahmeabschnitt 14 und einen rechten Aufnahmeabschnitt 16. Hierbei umgibt der linke Aufnahmeabschnitt 14 einen linken Aufnahmebereich 14a für ein Brillenglas und der rechte Aufnahmeabschnitt 16 umgibt einen rechten Aufnahmebereich 16a für ein weiteres Brillenglas. Die Aufnahmeabschnitte 14, 16 sind im gezeigten Ausführungsbeispiel vollständig geschlossen, was aus mechanischen Stabilitätsgründen grundsätzlich zu bevorzugen, aber nicht zwingend notwendig ist: Insbesondere könnten sie auch unten offen sein (Halbrandbrillen). Die beiden Aufnahmeabschnitte 14, 16 sind über einen Mittelsteg 18 miteinander verbunden.

An jeden Aufnahmeabschnitt 14, 16 schließt sich - vorzugsweise einstückig - ein Anschlussbereich 20, 20' an, an dem jeweils ein Bügel 30, 32 schwenkbar angeordnet ist.

Wie praktisch jedes andere Brillengestell auch, ist auch dieses Brillengestell spiegelsymmetrisch zu einer Mittelebene ausgestaltet; dies bedeutet, dass beide Anschlussbereiche 20, 20' spiegelsymmetrisch gleich aufgebaut sind. Dies ist natürlich zu bevorzugen, letztlich jedoch nicht zwingend.

Mit Bezug auf die Figur 2 wird nun der Aufbau der Anschlussabschnitte beispielhaft mit Bezug auf den rechten Anschlussabschnitt 20, sowie der Aufbau der Halteabschnitte der Bügel, hier beispielhaft am Aufbau des Halteabschnitts 30a des rechten Bügels 30, sowie der Aufbau einer Hülse 40, welche zwischen Halteabschnitt 30a des Bügels 30 und Anschlussabschnitt 20 angeordnet ist, beschrieben.

Es wird zunächst auf den Anschlussabschnitt 20 eingegangen: Dieser weist zwei jeweils von einem unteren zu einem oberen Ende verlaufende Stege, nämlich den ersten Steg 22 und den zweiten Steg 24 auf. Die Enden der beiden Stege sind jeweils nicht frei, d. h. sie sind mit jeweils einem umliegenden Bereich des Rahmens 12 verbunden, so dass sich zwischen den beiden Stegen 22, 24 eine vollständig berandete Durchbrechung 26 ergibt, welche hier einen im Wesentlichen rechteckigen Querschnitt aufweist. Zwischen dem rechten Aufnahmebereich 16a und dem ersten Steg 22 befindet sich ein offener Einschnitt 28, welcher unmittelbar in den rechten Aufnahmebereich 16a übergeht, jedoch nicht zu diesem gehört, da dieser offene Einschnitt 28 für die Befestigung des rechten Bügels 30 benötigt wird und zur Aufnahme eines Brillenglases somit nicht zur Verfügung steht.

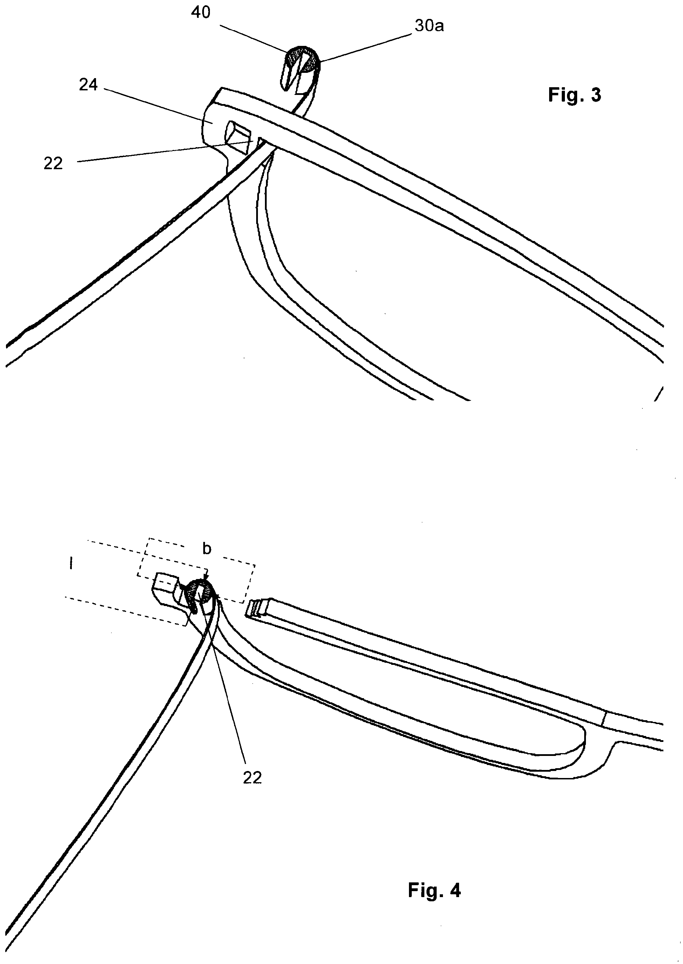

Der erste Steg 22 hat einen nicht-runden, vorzugsweise einen rechteckigen Querschnitt. Im gezeigten Ausführungsbeispiel ist die Länge I dieses Querschnitts größer als seine Breite b, was weiter zu bevorzugen ist (s. hierzu auch Figur 4).

Wie dies bereits erwähnt wurde, ist eine Hülse 40 vorhanden, welche die Form eines geschlitzten Zylinders hat. Das heiß, der Außenquerschnitt ist bis auf die durch den Schlitz 42 gebildete Lücke kreisförmig. Hierbei erstreckt sich der Schlitz in Axialrichtung des Zylinders und Länge und Breite des Schlitzes entsprechen im Wesentlichen Länge und Breite des Querschnittes des ersten Steges 22. Weiterhin entspricht die Länge der Hülse 40 ebenfalls im Wesentlichen der Länge des ersten Steges 22.

Der Bügel 30 ist streifenförmig und sein erstes Ende bildet den Halteabschnitt 30a, welcher im Wesentlichen in Form eines "Dreiviertel-Hohlzylinders", dessen Querschnitt im Wesentlichen einen Dreiviertelkreis mit einem offenen Ende beschreibt, ausgebildet ist, wobei der Innendurchmesser dieses Kreises im Wesentlichen dem Außendurchmesser der Hülse 40 entspricht. Die Länge (man könnte auch Höhe sagen) des "Dreiviertel-Hohlzylinders" entspricht im Wesentlichen der Länge der Hülse 40.

Im gezeigten Ausführungsbeispiel sind die Bügel einstückig ausgeführt und bestehen vorzugweise aus einem stark elastischen Material, wie beispielsweise Edelstahl. Es wäre hierbei auch möglich, dass die gezeigten Bügel lediglich den Kern eines Bügels bilden, auf dessen hinteren Abschnitt jeweils noch eine Kunststoffhülse oder dergleichen aufgeschoben ist, oder welcher in einem späteren Arbeitsschritt abschnittsweise mit Kunststoff beschichtet wird. Weiterhin wäre es möglich, dass der Bereich des Bügels, an welchem der Halteabschnitt angeformt ist, relativ kurz ist, und in einem späteren Verfahrensschritt ein hinterer Abschnitt an diesem Abschnitt befestigt wird. Da es jedoch ein vorrangiges Ziel der vorliegenden Erfindung ist, ein Brillengestell zur Verfügung zu stellen, welches aus möglichst wenigen Einzelteilen in möglichst wenigen Arbeitsschritten montiert werden kann, ist es bevorzugt, dass die Bügel (oder zumindest deren Kern) einstückig ausgebildet sind, wie dies in den Figuren auch dargestellt ist.

Die Montage der eben beschriebenen drei Elemente ist sehr einfach: Zunächst wird die Hülse 40 in den Halteabschnitt 30a des Bügels 30 in axialer Richtung eingesteckt, wobei die Abmessungen vorzugsweise so gewählt sind, dass hierbei die Hülse 40 im Halteabschnitt 30a leicht klemmt (Figur 3). Nun wird in einer Bewegung von hinten nach vorne die Hülse 40 mit dem daran gehaltenen Halteabschnitt 30a auf den ersten Steg 22 derart aufgeschoben, dass sich nach Abschluss dieses Schrittes der erste Steg 22 im Schlitz 42 der Hülse 40 befindet. Während dieses Montageschrittes erstreckt sich der Bügel 30 durch den offenen Einschnitt 28 bzw. durch den Aufnahmebereich 16a (Figur 4).

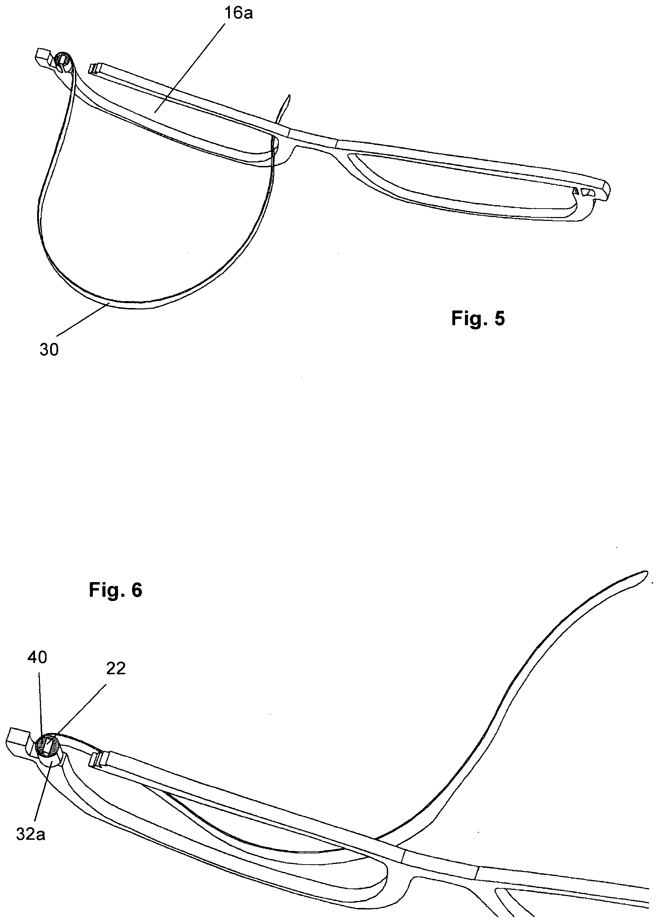

Nun wird, wie dies in Figur 5 gezeigt ist, der Bügel 30 durch den rechten Aufnahmebereich 16a hindurch verschwenkt, was im gezeigten Ausführungsbeispiel unter elastischer Deformation des Bügels erfolgt, bis sich der Bügel auf der hinteren Seite des Rahmens 12 befindet (Figuren 5, 6 und 7).

In diesem Zustand kann nun auch ein Brillenglas in den Aufnahmebereich eingesetzt werden.

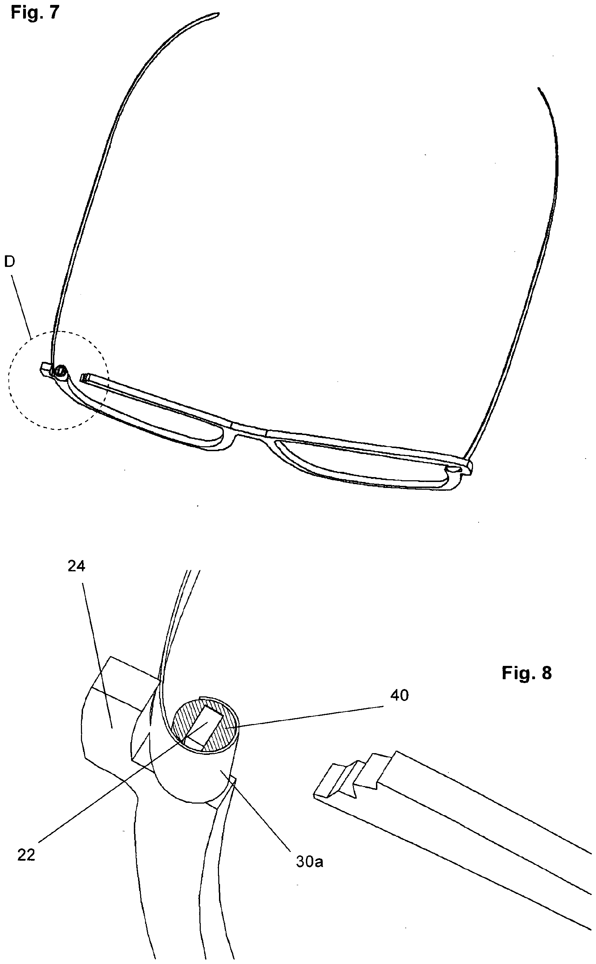

Wie man dem in Figur 8 gezeigten Detail entnimmt, ist nun der Bügel unverlierbar am ersten Steg des Anschlussabschnittes 20 gehalten, da sich die offene Seite des Schlitzes 42 der Hülse 40 und der freie Bereich des Halteabschnitts 30a des Bügels 30 nicht überlappen, auch dann nicht, wenn der Bügel 30 um ca. 90° nach innen in seine erste Endstellung geschwenkt wird (die Figur 7 zeigt die zweite Endstellung). Ein Verschwenken ist möglich, da ja die Hülse 40 einen kreisförmigen Außenquerschnitt und der Halteabschnitt 30a einen kreisförmigen Innenabschnitt aufweist. Die Hülse kann sich auf dem ersten Steg 22 auf Grund der nicht-runden, insbesondere rechteckigen Querschnitte nicht verdrehen. Der Schwenkwinkel nach Außen wird durch den zweiten Steg 24 begrenzt, wie man dies auch unmittelbar der Figur 8 entnehmen kann.

Das eben Beschriebene gilt natürlich in völlig analoger Weise auch für den linken Bügel 32 und den ihm zugeordneten Anschlussabschnitt 20'.

Im gezeigten Ausführungsbeispiel ist der Rahmen 12 einstückig gefertigt, insbesondere aus NXT. Es ist jedoch auch möglich, die ersten Stege 22 separat zu fertigen und ihre Enden mit dem jeweils benachbarten Bereich des Rahmens starr zu verbinden. Ein bevorzugtes Material für die ersten Stege ist in diesem Fall Edelstahl. Weiterhin ist es beispielsweise möglich, den gesamten Rahmen aus Edelstahl zu fertigen.

Auf einige mögliche Designvarianten soll abschließend noch hingewiesen werden: Beispielsweise ist es möglich, dass die Bügel Drahtabschnitte mit einem runden oder fast runden Querschnitt sind. Weiterhin ist es beispielsweise möglich, dass sich die längere Kante des Querschnitts der ersten Stege jeweils in Links-Rechts-Richtung erstreckt. Das Aufstecken der Hülse (s. Figuren 3 und 4) erfolgt in diesem Fall in einer nach außen gerichteten Bewegung.

Es sind weitere Designvarianten möglich.

### Bezugszeichenliste

- 10: Brillengestell
- 12: Rahmen
- 14: linker Aufnahmeabschnitt
- 14a: linker Aufnahmebereich
- 16: rechter Aufnahmeabschnitt
- 16a: rechter Aufnahmebereich
- 18: Mittelsteg
- 20, 20': Anschlussabschnitt
- 22: erster Steg
- 24: zweiter Steg
- 26: Durchbrechung
- 28: offener Eischnitt
- 30: rechter Bügel
- 30a: Halteabschnitt
- 32: linker Bügel
- 32a: Halteabschnitt
- 40: Hülse
- 42: Schlitz
- 44: Außenwand
- b: Breite
- I: Länge

## Patentansprüche

1. Verfahren zur Montage eines Brillengestells (10), wobei das Brillengestell folgendes aufweist:
- einen zwei Aufnahmeabschnitte (14, 16) für Brillengläser aufweisenden Rahmen (12), welcher benachbart zu jedem Aufnahmeabschnitt (14, 16) einen Anschlussabschnitt (20, 20') für einen Bügel (30, 32) aufweist, und
- zwei sich jeweils von einem rahmenseitigen ersten Ende zu einem rahmenfernen zweiten Ende erstreckende Bügel (30, 32), wobei jeder Bügel (30, 32) derart schwenkbar an seinem Anschlussabschnitt (20, 20') gehalten ist, dass er sich in einer ersten Endstellung im Wesentlichen parallel zum Rahmen (12) erstreckt und sich in einer zweiten Stellung vom Rahmen (12) nach hinten erstreckt,
wobei
- wenigstens ein Anschlussabschnitt (20, 20') einen sich von einem unteren Ende zu einem oberen Ende erstreckenden ersten Steg (22) mit einem nicht-runden Querschnitt aufweist,
- auf dem ersten Steg (22) eine geschlitzte Hülse (40) mit einem zumindest abschnittsweise kreisförmigen Außenquerschnitt drehfest angeordnet ist,
- das erste Ende des am Anschlussabschnitt (20, 20') angeordneten Bügels einen an seiner Hülse (40) anliegenden, die Hülse um mehr als 180°, aber weniger als 360° umlaufenden Halteabschnitt (30a) bildet, so dass der Halteabschnitt (30a) ein offenes Ende aufweist,
- die offene Seite des Schlitzes (42) der Hülse (40) nach vorne weist,
- dem ersten Steg (12) ein zweiter Steg (24) auf der Außenseite benachbart ist,
- zwischen dem ersten Steg (12) und einem dem ersten Steg (12) benachbarten Aufnahmebereich (14a, 16a) für ein Brillenglas, welcher vom Aufnahmeausschnitt (14, 16) zumindest abschnittsweise berandet ist, ein offener Einschnitt (28) vorgesehen ist, welcher unmittelbar in den Aufnahmebereich (14a, 16a) übergeht, und
- der Bügel (30, 32) einstückig ausgebildet ist oder einen einstückigen Kern aufweist, so dass der Halteabschnitt (32a) Teil dieses einstückigen Bügels (30, 32) oder des einstückigen Kerns ist,
mit folgenden Schritten:
a) Einführen der Hülse (40) in den vom Halteabschnitt (32a) des Bügels (30) umschlossenen Bereich,
b) Aufstecken der Hülse (40) auf den ersten Steg (22) des Anschlussabschnitts (20) in einer von hinten nach vorne gehenden Bewegung, sodass der Bügel (30) vor dem Rahmen (12) positioniert ist,
c) Durchführen des Bügels (30) beziehungsweise des Kerns durch den dem Anschlussabschnitt (20) benachbarten Aufnahmebereich (16a), welcher vom Aufnahmeabschnitt (16) umgeben wird.

2. Verfahren zur Montage einer Brille, wobei zunächst ein Brillengestell (10) gemäß Anspruch 1 montiert und anschließend ein Brillenglas in den Aufnahmebereich (16a) eingesetzt wird.

## Claims

1. Method for assembling a spectacle frame (10), wherein the spectacle frame comprises:
a frame (12) that has two holding sections (14, 16) for spectacle lenses, and that has, adjacent to each holding section (14, 16), a connecting section (20, 20') for a temple (30, 32), and
- two temples (30, 32) that each extend from a first end at the frame to a second end remote from the frame, wherein each temple (30, 32) is held at its connecting section (20, 20') so as to be pivotable such that it extends essentially parallel to the frame (12) in a first end position, and extends rearwards from the frame (12) in a second position, wherein
- at least one connecting section (20, 20') has a first bar (22) that extends from a lower end to an upper end and has a non-round cross-section,
- a slotted sleeve (40), with an outer cross-section which at least in sections is circular, is arranged on the first bar (22) so as to resist torsion,
- the first end of the temple arranged at the connecting section (20, 20') forms a retaining section (30a) that is in contact with its sleeve (40) and encompasses around the sleeve by more than 180° but less than 360°, such that the retaining section (30a) has an open end,
- the open end of the slot (42) of the sleeve (40) points forwards,
- a second bar (24) is adjacent to the first bar (12) on the outside,
- between the first bar (12) and a holding region (14a, 15a) for a spectacle lens, adjacent to the first bar (12) and being at least in sections edged by the holding section (14, 16), an open insection (28) is provided, which merges directly into the holding region (14a, 16a), and
- the temple (30, 32) is formed as one piece, or has a one-piece core, such that the holding section (32a) is a part of this one-piece temple (30, 32) or of the one piece core, with the following steps:
a) introducing the sleeve (40) into the region enclosed by the holding section (32a) of the temple (30),
b) plugging the sleeve (40) onto the first bar (22) of the connecting section (20) in a movement from the back to the front, such that the temple (30) is positioned in front of the frame (12),
c) passing the temple (30) or the core respectively through the holding region (16a) adjacent to the connecting section (20), which is surrounded by the holding section (16).

2. Method for assembling a pair of spectacles, wherein first a spectacle frame (10) is assembled in accordance with claim 1, and then a spectacle lens is inserted into the holding region (16a).

## Revendications

1. Procédé de montage d'une monture de lunettes (10), ladite monture de lunettes comprenant :
- un cadre (12) comprenant deux parties de réception (14, 16) pour des verres de lunettes, ledit cadre comprenant au voisinage de chaque partie de réception (14, 16) une partie de raccordement (20, 20') pour une branche (30, 32), et
- deux branches (30, 32) s'étendant respectivement d'une première extrémité côté cadre à une deuxième extrémité éloignée du cadre, chaque branche (30, 32) étant maintenue de manière pivotable sur sa partie de raccordement (20, 20'), de sorte qu'elle s'étend sensiblement parallèlement au cadre (12) dans une première position finale et s'étend vers l'arrière depuis le cadre (12) dans une deuxième position, et dans laquelle
- au moins une partie de raccordement (20, 20') comprend une première barrette (22) s'étendant d'une extrémité Inférieure à une extrémité supérieure, avec une section transversale non-circulaire,
- une douille fendue (40), avec une section transversale extérieure au moins en partie circulaire, est agencée de manière fixe en rotation sur la première barrette (22),
- la première extrémité de la branche agencée sur la partie de raccordement (20, 20') forme une partie de maintien (30a) adjacente à sa douille (40) entourant la douille sur plus de 180° mais moins de 360°, de sorte que la partie de maintien (30a) présente une extrémité ouverte,
- le côté ouvert de la fente (42) de la douille (40) est tourné vers l'avant,
- une deuxième barrette (24) est voisine de la première barrette (12) sur le côté extérieur,
- entre la première barrette (12) et une zone de réception (14a, 16a) pour un verre de lunettes adjacente à la première barrette (12), ledit verre étant bordé au moins partiellement par la découpe de réception (14, 16), Il est prévu une incision ouverte (28) se raccordant directement à la zone de réception (14a, 16a), et
- la branche (30, 32) est réalisée d'une seule pièce ou présente une âme d'une seule pièce, de sorte que la partie de maintien (32a) fait partie de cette branche (30, 32) d'une seule pièce ou d'une âme d'une seule pièce,
comprenant les étapes suivantes :
a) introduire la douille (40) dans la zone entourée par la partie de maintien (32a) de la branche (30),
b) monter la douille (40) sur la première barrette (22) de la partie de raccordement (20) dans un mouvement allant de l'arrière vers l'avant, de sorte que la branche (30) est positionnée devant le cadre (12),
c) faire passer la branche (30) respectivement l'âme à travers la zone de réception (16a) voisine de la partie de raccordement (20) et entourée de la partie de réception (16).

2. Procédé de montage d'une paire de lunettes, dans lequel on monte d'abord une monture de lunettes selon la revendication 1 puis on insère un verre de lunettes dans la zone de réception (16a).
